(19) Europäisches Patentamt
European Patent Office
Office européen des brevets

(11) **EP 1 543 443 B1**

(12) **FASCICULE DE BREVET EUROPEEN**

(45) Date de publication et mention
de la délivrance du brevet:
**02.04.2008 Bulletin 2008/14**

(21) Numéro de dépôt: **03780264.2**

(22) Date de dépôt: **11.09.2003**

(51) Int Cl.:
***G06F 17/30*** *(2006.01)*

(86) Numéro de dépôt international:
**PCT/FR2003/050051**

(87) Numéro de publication internationale:
**WO 2004/029832 (08.04.2004 Gazette 2004/15)**

(54) **PROCEDE DE REGROUPEMENT D IMAGES D UNE SEQUENCE VIDEO**

**VERFAHREN ZUR ZUSAMMENLEGUNG VON BILDERN EINER VIDEOSEQUENZ**

**METHOD OF GROUPING IMAGES FROM A VIDEO SEQUENCE**

(84) Etats contractants désignés:
**DE FR GB**

(30) Priorité: **27.09.2002 FR 0211952**

(43) Date de publication de la demande:
**22.06.2005 Bulletin 2005/25**

(73) Titulaire: **Thomson Licensing**
**92100 Boulogne-Billancourt (FR)**

(72) Inventeurs:
• **OISEL, Lionel**
**35137 La Nouaye (FR)**
• **LE CLERC, François**
**F-35000 RENNES (FR)**
• **CHUPEAU, Bertrand**
**F-35700 RENNES (FR)**

(74) Mandataire: **Ruellan-Lemonnier, Brigitte et al**
**Thomson**
**46, quai A. Le Gallo**
**92648 Boulogne Cedex (FR)**

(56) Documents cités:
**US-A- 5 706 503**

• **YEUNG M ET AL: "SEGMENTATION OF VIDEO BY CLUSTERING AND GRAPH ANALYSIS" COMPUTER VISION AND IMAGE UNDERSTANDING, ACADEMIC PRESS, US, vol. 71, no. 1, 1 juillet 1998 (1998-07-01), pages 94-109, XP000766005 ISSN: 1077-3142 cité dans la demande**
• **YONG RUI ET AL: "Exploring video structure beyond the shots" MULTIMEDIA COMPUTING AND SYSTEMS, 1998. PROCEEDINGS. IEEE INTERNATIONAL CONFERENCE ON AUSTIN, TX, USA 28 JUNE-1 JULY 1998, LOS ALAMITOS, CA, USA,IEEE COMPUT. SOC, US, 28 juin 1998 (1998-06-28), pages 237-240, XP010291589 ISBN: 0-8186-8557-3**
• **SARKAR A ET AL: "A SIMPLE UNSUPERVISED MRF MODEL BASED IMAGE SEGMENTATION APPROACH" IEEE TRANSACTIONS ON IMAGE PROCESSING, IEEE INC. NEW YORK, US, vol. 9, no. 5, mai 2000 (2000-05), pages 801-812, XP000958394 ISSN: 1057-7149**

**Description**

L'invention concerne un procédé et un dispositif de regroupement d'images clés par utilisation d'attributs spatiaux-temporels.

Le regroupement, plus connu sous l'appellation anglaise de « clustering », a pour but de grouper des données en exploitant des mesures de distances ou similarités entre celles-ci, des données faiblement distantes étant regroupées au sein d'une même classe. Une application relative aux données vidéo numériques concerne la construction automatique de résumés vidéo.

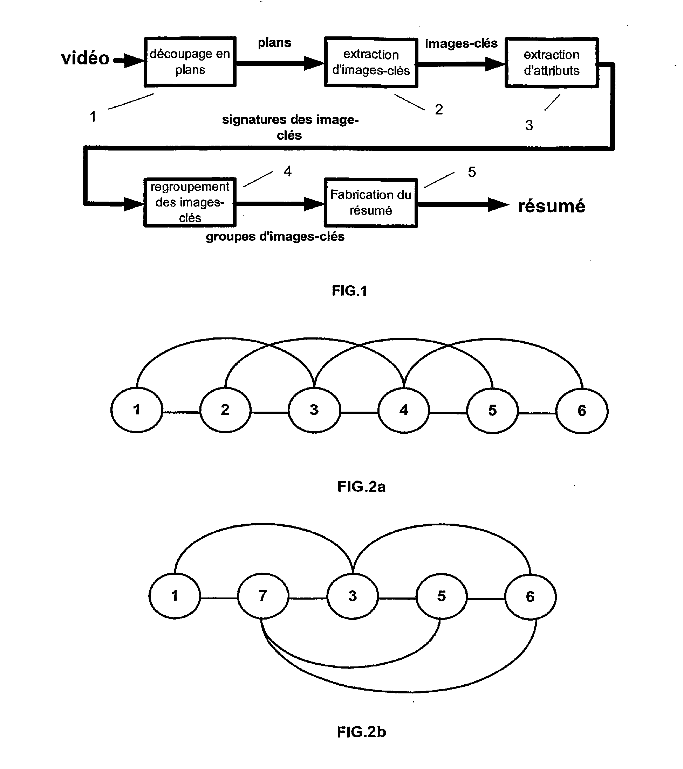

La figure 1 représente un schéma général d'un procédé de construction d'un résumé vidéo d'une séquence d'images.

Dans une première étape 1, la séquence vidéo est découpée en plans vidéo. Une deuxième étape 2 extrait des images caractéristiques ou images clés des différents plans de la séquence. Pour chaque image clé, c'est l'étape 3, une signature est calculée, par exemple à partir d'attributs de l'image tels que la couleur, la structure.... L'étape suivante 4 a pour but de regrouper les différents plans qui se ressemblent en groupes de plans ou « clusters ». Une mesure de similarité est ainsi effectuée, à partir d'un calcul quelconque de distances entre les signatures des images clés associées à chaque plan. L'étape suivante 5 fabrique le résumé en extrayant une image clé par groupe de plans.

Ce procédé permet de réduire le nombre de plans caractéristiques, par exemple lors de séquences vidéo avec plans alternés, pour créer des résumés vidéo, des index ...

Une approche connue s'attaquant aux problèmes de regroupement de plans pour la construction de résumés vidéo est celle proposée par Yeung et Yeo dans le document "Segmentation of video by clustering and graph analysis", Computer Vision and Image Understanding, vol 71, no 1, July, pp 94-109, 1998. A chaque couple de plans est associée une distance qui est une mesure sur les différences entre signatures. Outre la distance entre signatures, la méthode proposée s'attache à ne pas rassembler de plans dont la distance temporelle est supérieure à un seuil temporel T. L'idée sous-jacente repose sur l'hypothèse que des plans appartenant à une même unité sémantique ne peuvent être très distants. Cette hypothèse présente également l'avantage de limiter le nombre de regroupements potentiels et ainsi de limiter le coût calculatoire. L'algorithme de regroupement utilisé fonctionne sur des regroupements successifs de plans en commençant par les plus semblables jusqu'à ce que les distances soient toutes supérieures à un seuil.

Dans cette méthode, si deux plans sont séparés de plus de T images, le regroupement n'est pas possible. Dans l'article cité, T est fixé à une valeur de l'ordre de quelques milliers d'images. Le problème principal de cette méthode réside dans le fait que ce seuil est fixe, qu'il a une incidence importante sur le résultat final et qu'il est de ce fait difficile à fixer a priori. Par exemple, si une scène de dialogue dure plus de 3000 images et si cette valeur dépasse le seuil temporel, un surdécoupage a lieu. Tous les plans ainsi regroupés doivent être proches deux à deux à la fois visuellement et temporellement. La taille des groupes ainsi générés est de ce fait relativement limitée. Le résultat final de cet algorithme de clustering se caractérise par l'obtention de groupes relativement uniformes en nombre de plans, ce nombre étant généralement faible et de toutes façons limité par la valeur du seuil T.

L'invention a pour but de pallier les inconvénients précités. Elle a pour objet un procédé de regroupement d'images d'une séquence vidéo constituée de plans et représentée par une structure en graphe tel que défini par la revendication 1.

Selon une mise en oeuvre particulière de l'invention, la valeur de potentiel associé aux arêtes et aux noeuds est une fonction respectivement décroissante et croissante de la distance temporelle.

Le calcul de similarité des images prend en compte la distance entre signatures, par exemple la différence entre histogrammes, et la distance temporelle entre images clés définissant les plans. Cette contrainte temporelle est adaptative, deux plans trop éloignés initialement pour être regroupés pouvant se retrouver potentiellement « regroupables » en cas de fusion de plans intermédiaires.

L'algorithme de calcul est basé sur une minimisation énergétique par fusion s'appuyant sur une structure de graphe. Contrairement à la méthode précédente, pour appartenir à un groupe d'images, aussi appelé par la suite classe d'images ou classe de plans, une image candidate doit être proche visuellement et temporellement d'au moins une image du groupe.

Un avantage de l'invention est la prise en compte des images même éloignées temporellement, du fait de la fusion, tout en favorisant le regroupement d'images temporellement proches.

Un autre avantage réside dans le fait que seule une image d'un groupe doit être similaire à l'image candidate pour autoriser la fusion. Les groupes ainsi créés peuvent comporter plus d'éléments que dans le cas de la méthode classique. Le schéma proposé permet de générer des groupes plus hétérogènes, moins dépendants de valeurs de seuils donc plus proches des données, sans pour autant rendre les calculs trop complexes ou trop longs.

D'autres particularités et avantages de l'invention apparaîtront clairement dans la description suivante donnée à titre d'exemple non limitatif et faite en regard des figures annexées qui représentent :

- la figure 1, un schéma général de la construction de résumés vidéo,

- la figure 2a, un exemple de graphe initial,
- la figure 2b, le résultat de ce graphe après une itération,
- la figure 3 un organigramme de minimisation de l'énergie du graphe.

La méthode proposée s'appuie sur une structure de graphe. Un graphe est constitué d'un ensemble de noeuds et d'arêtes. Un noeud $n_i$ symbolise un plan ou groupe de plans vidéo similaires suivant la distance visuelle et temporelle choisie, chaque plan $P_i$ étant représenté par au moins une image clé. Les arêtes relient les noeuds entre eux, deux noeuds non reliés par une arête n'étant pas potentiellement fusionnables.

Une taille de fenêtre temporelle $T$ est choisie. Elle est donnée en nombre maximal de plans T séparant deux plans dans la séquence vidéo. Lors de l'initialisation du graphe, des arêtes sont créées à partir d'un noeud donné correspondant à un plan donné vers chacun des noeuds dont les plans se trouvent dans la fenêtre temporelle de ce plan donné.

D'une manière pratique, les noeuds sont d'abord reliés par des arêtes selon le déroulement séquentiel de la séquence vidéo. Ce cheminement est ensuite pris en compte, lors de l'adjonction des arêtes complémentaires, pour l'application de la fenêtre temporelle. Alors, la valeur entière $T$ choisie pour cette étape d'initialisation du graphe signifie que seuls les noeuds séparés au maximum de $T$ noeuds du noeud considéré sont pris en compte pour le calcul des arêtes initiales partant de ce noeud. Une arête initiale $a_{ij}$ n'est créée entre le noeud $n_i$ et le noeud $n_j$ que si la distance temporelle $d_T$ séparant ces noeuds auxquels sont associés les plans $P_i$ et $P_j$ est inférieure à un seuil $T$. Cette contrainte n'est effective qu'à l'initialisation du graphe, les fusions ultérieures de noeuds permettant de relier des noeuds beaucoup plus éloignés à l'origine, si nécessaire.

Le choix de ce seuil à l'initialisation est fait dans un but d'optimisation du temps de calcul très dépendant du nombre d'arêtes.

L'initialisation du graphe est effectuée en créant un noeud par plan vidéo. La figure 2a représente un graphe initial constitué d'un ensemble de 6 plans vidéo symbolisés par les noeuds 1 à 6. Dans l'exemple de la figure 2a, à titre d'illustration simplifiée, le seuil temporel ou fenêtre temporelle à l'initialisation est fixé à $T$=1. Le seuil est en réalité choisi égal à 6 dans notre implémentation. Dans l'exemple donc, les arêtes sont créées entre un noeud et les noeuds séparés de ce noeud d'un plan au maximum. La figure 2b, qui correspond à la fusion des noeuds 2 et 4 pour donner le noeud 7 montre cependant que, dés la première itération, les noeuds 6 et 7, reliés par des arêtes, sont en dehors de la fenêtre temporelle.

L'énergie du système est égale à la somme des potentiels des arêtes et des noeuds. Le but est de regrouper ou fusionner les noeuds de manière à diminuer l'énergie globale du système.

Pour définir l'énergie globale du système, la notion de potentiel $V_n$ de noeud et $V_a$ d'arête est introduite. Un potentiel est calculé à partir d'une distance de base entre deux images $I_i$ et $I_f$, distance temporelle et distance entre attributs.

La valeur du potentiel associé à une arête $a_{ij}$ est définie à l'aide d'une fonction décroissante de la distance. Plus les distances temporelles et les distances entre attributs sont importantes, plus le potentiel est faible. L'objectif global de l'algorithme étant de minimiser l'énergie globale du système, plus les plans attachés à deux noeuds seront proches selon les distances précédemment définies, plus les potentiels des arêtes seront élevés et plus la fusion et donc l'élimination des arêtes sera favorisée.

La valeur du potentiel associé au noeud $n_k$ est définie à partir d'une fonction croissante de la distance. Plus les distances temporelles ou les distances entre attributs calculées entre les images appartenant à deux noeuds distincts sont faibles, plus le potentiel associé au noeud fusion est faible, donc plus le système sera enclin à fusionner les deux noeuds pour créer un noeud de faible potentiel.

Soient $V_a(n_i, n_j)$ et $V_n(n_m)$ respectivement les potentiels d'une arête reliant les noeuds $n_i$ et $n_j$ et d'un noeud $n_m$.

Nous décrivons dans un premier temps le potentiel lié aux arêtes. On calcule ici les potentiels « inter-images » de l'arête pour chacun des couples formés d'une image parmi les images associées à un noeud extrémité de l'arête et d'une image parmi les images associées à un noeud autre extrémité de l'arête. Il s'agit, en d'autres termes, des potentiels calculés à partir des distances croisées entre les images associées au premier noeud et celles associées au deuxième noeud aux extrémités de l'arête.

Le potentiel $V_a(n_i, n_j)$ d'une arête s'écrit alors en fonction des distances croisées entre les images $I_k$ appartenant à $n_i$ et les images $I_l$ appartenant à $n_j$. La valeur minimale suivante est calculée :

$$V_a(n_i, n_j) = \min_{I_k \in P_i, I_l \in P_j} (w_{att} \cdot F_a(K_{att}, \tilde{d}_{att}, d_{att}(I_k, I_l)) + w_T \cdot F_a(K_T, \tilde{d}_T, d_T(I_k, I_l)))$$

où :

$P_m$ représente l'ensemble des images associé au noeud $n_m$

$F_a$ est une fonction décroissante

$w_{att}$ et $w_T$ représentent les poids liés aux attributs et au temps (dans notre implémentation, $w_{att}$=3 et $w_T$=1)

$\underset{\sim}{d}_{att}(I_k, I_l)$ est la fonction distance associée aux attributs caractéristiques des deux images

$\tilde{d}_{att}$ représente la moyenne des distances entre images calculées sur le graphe initial

$\underset{\sim}{d}_T(I_k, I_l)$ est la distance temporelle séparant les deux images

$\tilde{d}_T$ est égal à $T$, $T$ représentant le seuil temporel

$K_{att}$ et $K_T$ sont deux constantes

L'ensemble des images associé au noeud $n_m$ est également appelé classe de plans associée au noeud $n_m$. Cette classe regroupe l'ensemble des images des classes de plans fusionnés.

La distance entre attributs peut être prise comme une différence classe à classe entre histogrammes caractérisant chaque image. La distance temporelle est quant à elle définie comme le nombre de plans séparant les deux plans auxquels appartiennent les images $I_k$ et $I_l$.

Dans l'implémentation, la fonction décroissante $F_a$ est de la forme suivante :

$$\mathbf{F_a}(\mathbf{K}, \tilde{\mathbf{d}}, \mathbf{d}) = \frac{1}{1 + e^{\frac{K}{\tilde{d}}(d - \tilde{d})}}$$

Des valeurs de potentiel sont également calculées pour les noeuds du graphe. Lorsque deux noeuds $n_i$ et $n_j$ correspondant aux images-clé $I_i$ et $I_j$ appartenant respectivement aux classes de plan $P_i$ et $P_j$ sont fusionnés pour créer un nouveau noeud $n_k$, les images $I_i$ et $I_j$ sont intégrées dans la nouvelle classe de plans $P_k$ associée au noeud $n_k$. Le nombre d'images associées augmente ainsi au fur et à mesure des fusions. D'une manière générale, le nombre d'images associées à un nouveau noeud correspond à la somme des images associées aux noeuds fusionnés générant le nouveau noeud.

Le potentiel d'un noeud fusion d'un premier et deuxième noeud est obtenu à partir des potentiels calculés sur l'ensemble des couples d'images formés d'une image associée au premier noeud et d'une image associée au second noeud. Cette valeur est fonction de la distance entre attributs $d_{att}$ et de la distance temporelle $d_T$. Il y a autant de potentiels calculés qu'il y a de couples d'images. La valeur choisie est celle qui donne le potentiel minimum.

Le potentiel Vn(nm) d'un noeud issu de la fusion de deux noeuds ni et nj existants est donc défini par la fonction suivante :

$$V_n(n_m = n_i \bigcup n_j) = \min_{I_k \in P_i, I_l \in P_j} (w_{att} \cdot F_n(K_{att}, \tilde{d}_{att}, d_{att}(I_k, I_l)) + w_T \cdot F_n(K_T, \tilde{d}_T, d_T(I_k, I_l)))$$

Le potentiel d'un noeud fusion est donc calculé à partir des distances croisées entre les images appartenant à chacun des noeuds candidats à la fusion.

Dans l'implémentation, la fonction croissante $F_n$ est de la forme suivante :

$$\mathbf{F_n}(\mathbf{K}, \tilde{\mathbf{d}}, \mathbf{d}) = 1 - \frac{1}{1 + e^{\frac{K}{\tilde{d}}(d - \tilde{d})}} = 1 - \mathbf{F_a}(\mathbf{K}, \tilde{\mathbf{d}}, \mathbf{d})$$

A l'initialisation du graphe, le potentiel des noeuds est nul. Il y a une image clé par noeud. C'est au cours du processus de fusion que ce potentiel prend une valeur strictement positive.

Le facteur $\kappa$ utilisé dans les fonctions $F_a$ et $F_n$ est un paramètre qui influence la courbure de la fonction. Plus $\kappa$ est important, plus la fonction tend vers 0 ou vers 1 rapidement quand on s'éloigne de la valeur moyenne $\tilde{d}$. En terme de potentiel, plus $\kappa$ est important, plus les variations de d autour de la valeur moyenne entraînent des variations importantes du potentiel.

Dans le cas de la fonction attachée à la distance entre attributs, $K_{att}$ peut être pris égal à 2. Dans le cas de la fonction attachée à la distance temporelle, $K_T$ peut être pris égal à 7.

Lors du calcul d'un potentiel relatif à un couple d'images $(I_i, I_j)$, plus les images traitées sont éloignées, temporellement ou selon leurs attributs, plus le potentiel de l'arête correspondant à ces deux images est faible, plus le potentiel du noeud correspondant au couple d'images fusionné est fort.

La contrainte temporelle apparaît donc sous deux formes dans notre algorithme :

- par l'existence où non d'une arête entre deux noeuds, cette existence étant initialement liée à la distance temporelle séparant deux plans
- par l'influence de la distance temporelle séparant deux images sur la valeur du potentiel associé aux arêtes ou aux noeuds

L'énergie globale du système est égale à la somme des potentiels associés à chaque arête et à chaque noeud.

Un processus itératif de fusions est mis en oeuvre pour obtenir une configuration du système ayant l'énergie globale la plus faible possible. Le but de chaque itération est de faire décroître l'énergie globale. Le calcul de l'énergie minimale nécessiterait d'essayer toutes les combinaisons possibles. Ce nombre pouvant être considérable, en fonction du nombre de plans, le schéma de minimisation énergétique choisi est un schéma sous-optimal. Il ne garantit pas que la solution trouvée corresponde à la configuration minimisant l'énergie totale du système. Il présente cependant l'intérêt d'être rapide tout en fournissant une solution énergétique acceptable.

Plus la distance entre deux images est faible, plus le potentiel de l'arête relatif à ces deux images est fort donc plus le potentiel de l'arête reliant les noeuds correspondants est élevé. On cherche à diminuer l'énergie globale du système donc à éliminer les arêtes de plus fort potentiel, ce qui revient à éliminer le potentiel relatif à ces arêtes, les potentiels des arêtes sortant des noeuds fusionnés étant recalculés. Ce qui correspond bien à vouloir regrouper les images les plus proches, aussi bien du point de vue attributs que du point de vue temporel.

Le potentiel d'un noeud obtenu après fusion des deux noeuds aux extrémités de l'arête supprimée est recalculé. Plus les distances entre les images associées aux noeuds à fusionner sont grandes, plus les potentiels du noeud fusionné relatifs aux couples d'images sont importants, plus le potentiel de ce noeud qui est la valeur minimum parmi ces potentiels est important.

Dans l'exemple de la figure 2b, les noeuds 2 et 4 sont fusionnés pour donner le noeud 7. Les images clé des noeuds 2 et 4 sont donc maintenant associées au noeud 7. Le potentiel du noeud 7 est calculée ainsi que les potentiels des nouvelles arêtes partant de ce noeud, définissant ainsi la nouvelle configuration.

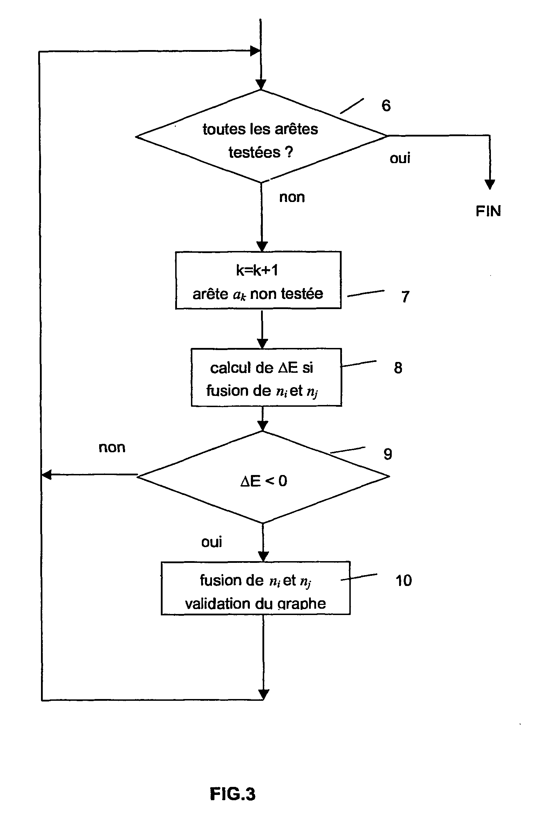

Le processus itératif de réduction d'énergie mis en oeuvre est décrit à la figure 3.

La première étape référencée 6 vérifie si toutes les arêtes du graphe ont été testées.

Dans l'affirmative, les itérations sont terminées et les plans ou images clés se trouvent regroupées en classes de plans, créées au fur et à mesure des fusions des noeuds du graphe.

Dans la négative, l'étape suivante est l'étape 7 qui prend en compte une arête $a_k$ non testée du graphe dont les extrémités sont les noeuds que l'on appellera $n_i$ et $n_j$. Les arêtes sont par exemple sélectionnées en fonction de leur valeur énergétique dans l'ordre décroissant des valeurs du potentiel associé. En effet une arête de fort potentiel supprimée entraîne a priori une baisse énergétique importante.

L'étape suivante 8 effectue un calcul de l'énergie du graphe en supposant une fusion des noeuds $n_i$ et $n_j$. En plus du potentiel du noeud fusionné, le potentiel des nouvelles arêtes reliant le nouveau noeud à l'ensemble des noeuds adjacents aux noeuds $n_i$ et $n_j$ est pris en compte pour le calcul de l'énergie du nouveau graphe. Si l'énergie trouvée est supérieure à l'énergie avant fusion, test effectué à l'étape 9, on retourne à l'étape 6 puis à l'étape 7 pour traiter l'arête suivante, dans le cas ou toutes les arêtes n'ont pas été testées.

Dans le cas où l'énergie calculée est inférieure à l'énergie du graphe avant fusion, l'étape suivante est l'étape 10 qui valide la fusion des noeuds $n_i$ et $n_j$. et le nouveau graphe qui en découle.

L'étape suivante 6 vérifie si toutes les arêtes ont été testées. Il s'agit des arêtes non modifiées par la fusion des noeuds mais également des nouvelles arêtes calculées lors de cette fusion. Dans l'affirmative, le graphe final est celui validé à l'étape précédente10.

Une simplification consiste à utiliser un critère d'arrêt sous optimal permettant d'éviter le parcours exhaustif des arêtes. Cette simplification consiste en l'arrêt de la minimisation dès que la fusion potentielle de deux noeuds entraîne une augmentation de l'énergie. Cette simplification est rendue acceptable par la sélection intelligente des arêtes dans l'ordre décroissant de leur valeur de potentiel.

Le schéma présenté est globalement sous-optimal du fait du caractère non réversible de la fusion. Le passage à une minimisation de l'énergie optimale peut être envisagé moyennant un coût calculatoire élevé.

Le choix de la fonction d'énergie et des potentiels que nous venons de définir nous permet de simplifier le schéma de minimisation énergétique. En effet, le fait de choisir le minimum des potentiels fait que si le potentiel associé à un noeud provenant de la fusion de deux noeuds est inférieur à la somme des potentiels de ces deux noeuds alors la fusion des deux noeuds entraîne nécessairement une baisse du potentiel des arêtes voisines. On peut donc se contenter d'une étude locale de la variation d'énergie, tout en assurant une baisse globale de cette énergie.

Le procédé décrit permet d'obtenir un processus de fusion performant malgré la limitation calculatoire. Celle-ci concerne les possibilités d'appariements initiaux limitées, le nombre d'arêtes étant limité à l'initialisation. Elle concerne également l'exploitation d'une fenêtre réduite à l'initialisation. Cependant, du fait du processus de fusion, des plans éloignés peuvent être regroupés. Les potentiels prennent en compte les distances temporelles et entre attributs. Ils autorisent des fusions si les images clés, bien que distantes, sont très ressemblantes ou bien, si les images clés bien que moyennement ressemblantes, sont très proches temporellement.

**Revendications**

**1.** Procédé de regroupement d'images (4) d'une séquence vidéo constituée de plans et représentée par une structure en graphe, un noeud du graphe représentant un plan ou une classe de plans de la séquence vidéo, un plan étant défini par une ou des images clés lui appartenant et les noeuds étant reliés par des arêtes, le graphe étant initialisé en créant un noeud avec potentiel nul par plan et en reliant ces noeuds par des arêtes selon le déroulement séquentiel de la séquence vidéo, d'autres arêtes étant créées entre deux noeuds si ces noeuds précédemment reliés sont séparés d'un nombre maximum prédéterminé de noeuds, des attributs prédéfinis relatifs au contenu des images étant calculés pour les images clés, **caractérisé en ce qu'**il comporte l'itération suivante :

- sélection d'une nouvelle arête $a_k$ (7) du graphe reliant les noeuds $n_i$ et $n_J$
- calcul du potentiel du noeud $n_m$ (8), obtenu par fusion des deux noeuds $n_J$ et $n_J$, le potentiel étant calculé en fonction de distances entre les attributs des images clés définissant la classe de plans du noeud $n_i$ et ceux des images clés définissant la classe de plans du noeud $n_J$ et en fonction de la distance temporelle de ces images clés,
- calcul du potentiel de chaque arête (8) reliant le noeud $n_m$ à un autre noeud du graphe précédemment relié aux noeuds $n_i$ ou $n_J$, en fonction des distances entre les attributs des images clés définissant la classe de plans du noeud $n_m$ et ceux des images clés définissant la classe de plans de l'autre noeud et en fonction de la distance temporelle entre ces images clés, la nouvelle classe de plans associée au noeud fusionné comprenant les images clés des classes de plans des noeuds fusionnés.
- fusion effective des deux noeuds $n_i$ et $n_J$ (10) si l'énergie de ce graphe, qui est la somme des potentiels des noeuds et des arêtes, est inférieure à l'énergie du graphe avant la fusion (9), pour fournir un nouveau graphe, la nouvelle classe de plans associée au noeud fusionné comprenant les images clés des classes de plans des noeuds fusionnés.

**2.** Procédé selon la revendication 1, **caractérisé en ce que** la valeur de potentiel associé aux arêtes et aux noeuds est déterminée par une fonction respectivement décroissante et croissante de la distance temporelle.

**3.** Procédé selon la revendication 1, **caractérisé en ce que** le potentiel d'une arête reliant deux noeuds $n_i$ et $n_j$ est calculé selon la fonction suivante :

$$V_a(n_i, n_j) = \min_{I_k \in P_i, I_l \in P_j} (w_{att} \cdot F_a(K_{att}, \tilde{d}_{att}, d_{att}(I_k, I_l)) + w_T \cdot F_a(K_T, \tilde{d}_T, d_T(I_k, I_l)))$$

et **en ce que** le potentiel d'un noeud né de la fusion de deux noeuds ni et nj est défini par la fonction suivante :

$$V_n(n_m = n_i \cup n_j) = \min_{I_k \in P_i, I_l \in P_j} (w_{att} \cdot F_n(K_{att}, \tilde{d}_{att}, d_{att}(I_k, I_l)) + w_T \cdot F_n(K_T, \tilde{d}_T, d_T(I_k, I_l)))$$

où :

$P_i$ représente la classe de plans associée au noeud $n_i$ et comportant, les images $I_k$
$F_a$ est une fonction décroissante
$F_n$ est une fonction croissante
$W_{att}$ et $w_T$ représentent les poids liés aux attributs et au temps
$d_{att}(I_k, I_r)$ est la fonction distance associée aux attributs caractéristiques des deux images
$\tilde{d}_{att}$ représente la moyenne des distances entre images calculées sur le graphe initial

$d_T(l_{k,},l_1)$ est la distance temporelle séparant les deux images $\tilde{d}_T$ est égal à T qui représente le seuil temporel $K_{att}$ et $K_T$ sont deux constantes

4. Procédé selon la revendication 3, **caractérisé en ce que** la fonction décroissante est de la forme

$$F_a(K, \tilde{d}, d) = \frac{1}{1 + e^{\frac{K}{\tilde{d}}(d - \tilde{d})}}$$

et **en ce que** la fonction croissante est de la forme

$$F_n(K, \tilde{d}, d) = 1 - \frac{1}{1 + e^{\frac{K}{\tilde{d}}(d - \tilde{d})}}$$

5. Procédé selon la revendication 1, **caractérisé en ce que** les itérations sont arrêtées dés que la fusion potentielle de deux noeuds (8) entraîne une augmentation de l'énergie (9), les arêtes $a_k$ étant sélectionnées 7, pour le calcul des potentiels, dans l'ordre décroissant de leur valeur de potentiel.

**Claims**

1. Method of clustering images (4) of a video sequence consisting of shots and represented by a graph-like structure, a node of the graph representing a shot or a class of shots of the video sequence, a shot being defined by one or several key images belonging to it and the nodes being connected by edges, the graph being initialized by assigning a node with potential zero to each shot and linking these nodes through edges according to the progress of the video sequence, other edges being created between two nodes if these nodes previously linked are separated by a predetermined maximum number of nodes, predefined attributes relating to the content of the images being calculated for the key images, **characterized in that** it comprises the following iteration:

   - selection of an edge $a_k$ (7) connecting nodes $n_i$ and $n_j$
   - calculation of the potential of node $n_m$ (8), merging of the two nodes $n_i$ and $n_j$, as a function of the distances between the attributes of the key images defining the class of shots of node $n_i$ and those of the key images defining the class of shots of node $n_j$ and as a function of the temporal distance of these key images,
   - calculation of the potential of each edge (8) connecting the node $n_m$ to another node of the graph previously connected to nodes $n_i$ or $n_j$, as a function of the distances between the attributes of the key images defining the class of shots of the node nm and those of the key images defining the class of shots of the other node and as a function of the temporal distance between these key images, the new class of shots associated with the merged node $n_m$ comprising the key images of the classes of shots of the merged nodes,
   - merging of the two nodes $n_i$ and $n_j$ (10) if the energy of this graph, which is the sum of the potentials of the nodes and of the edges, is less than the energy of the graph before merging (9), to give a new graph, the new class of shots associated to the merged node comprising the key images of the classes of the shots relating to the merged nodes.

2. Method according to Claim 1, **characterized in that** the value of potential associated with the edges and with the nodes is a respectively decreasing and increasing function of temporal distance.

3. Method according to claim 1, **characterized in that** the potential of an edge connecting two nodes $n_i$ and $n_j$ is calculated according to the following equation:

$$V_a(n_i, n_j) = \min_{I_k \in P_i, I_l \in P_j} (w_{att} \cdot F_a(K_{att}, \tilde{d}_{att}, d_{att}(I_k, I_l)) + w_T \cdot F_a(K_T, \tilde{d}_T, d_T(I_k, I_l)))$$

and **in that** the potential of a node born from the merging of two nodes ni and nj is defined by the following function:

$$V_n(n_m = n_i \bigcup n_j) = \min_{I_k \in P_i, I_l \in P_j}(w_{att} \cdot F_n(K_{att}, \tilde{d}_{att}, d_{att}(I_k, I_l)) + w_T \cdot F_n(K_T, \tilde{d}_T, d_T(I_k, I_l)))$$

where:

$P_i$ represents the class of shots associated with node $n_i$ and comprising images $I_k$

$F_a$ is a decreasing function

$F_n$ is an increasing function

$W_{att}$ and $W_T$ represent the weights related to attributes and to time

$d_{att}(I_k, I_l)$ is the distance function associated with the characteristic attributes of the two images

$\tilde{d}_{att}$ represents the mean of the distances between images calculated on the initial graph

$d_T(I_k, I_l)$ is the temporal distance separating the two images

$\tilde{d}_T$ is equal to T which represents the temporal threshold

$K_{att}$ and $K_T$ are two constants.

**4.** Method according to claim 3, **characterized in that** the decreasing function is of the form

$$F_a(K, \tilde{d}, d) = \frac{1}{1 + e^{\frac{K}{\tilde{d}}(d - \tilde{d})}}$$

and **in that** the increasing function is of the form

$$F_n(K, \tilde{d}, d) = 1 - \frac{1}{1 + e^{\frac{K}{\tilde{d}}(d - \tilde{d})}}$$

**5.** Method according to claim 1, **characterized in that** the iterations are stopped as soon as the potential merging of two nodes (8) gives rise to an increase in the energy (9), the edges $a_k$ being selected (7) for the calculation of the mergings, in decreasing order of their value of potential.

**Patentansprüche**

**1.** Verfahren zur Zusammenführung von Bildern (4) einer Videosequenz, die aus Ebenen besteht und durch eine Graphenstruktur abgebildet wird, wobei ein Graphenknoten eine Ebene oder eine Klasse von Ebenen der Videosequenz abbildet, wobei eine Ebene durch ein Schlüsselbild oder durch Schlüsselbilder, das/die zu ihm gehört/gehören, definiert wird und die Knoten durch Kanten verbunden sind, wobei der Graph initialisiert wird und dabei ein Knoten mit einem Nullpotenzial pro Ebene erzeugt wird und diese Knoten durch Kanten gemäß dem sequenziellen Ablauf der Videosequenz verbunden werden, wobei weitere Kanten zwischen zwei Knoten erzeugt werden, wenn diese zuvor verbundenen Knoten von einer maximalen vorgegebenen Knotenanzahl getrennt sind, wobei vorgegebene Attribute bezüglich des Inhalts der Bilder für die Schlüsselbilder berechnet werden, **dadurch gekennzeichnet, dass** es die folgende Iteration aufweist:

Auswahl einer neuen, die Knoten $n_i$ und $n_j$ verbindenden Kante $a_k$ (7) des Graphen,

- Berechnung des Potenzials des Knotens $n_m$ (8), der sich aus der Zusammenlegung der zwei Knoten $n_i$ und $n_j$ ergibt, wobei das Potenzial in Abhängigkeit von Abständen zwischen den Attributen der Schlüsselbilder, die die Klasse von Ebenen des Knotens $n_i$ definieren, und denjenigen der Schlüsselbilder, die die Klasse von Ebenen des Knotens $n_j$ definieren, sowie in Abhängigkeit von dem Zeitabstand dieser Schlüsselbilder berechnet wird,

- Berechnung des Potenzials jeder Kante (8), die den Knoten $n_m$ mit einem anderen Knoten des Graphen verbindet, der zuvor mit den Knoten $n_i$ oder $n_j$ verbunden war, in Abhängigkeit von den Abständen zwischen den Attributen der Schlüsselbilder, die die Klasse von Ebenen des Knotens $n_m$ und denjenigen der Schlüssel-

bilder, die die Klasse von Ebenen des anderen Knotens definieren, sowie in Abhängigkeit von dem Zeitabstand dieser Schlüsselbilder, wobei die dem sich aus der Zusammenlegung ergebenden Knoten $n_m$ zugeordnete neue Klasse von Ebenen die Schlüsselbilder der Klassen von Ebenen der zusammengelegten Knoten aufweist, effektive Zusammenlegung der zwei Knoten $n_i$ und $n_j$ (10), wenn die Energie dieses Graphen, die die Summe der Potenziale der Knoten und der Kanten darstellt, geringer ist als die Energie des Graphen vor der Zusammenlegung (9), um einen neuen Graphen bereitzustellen, wobei die neue Klasse von Ebenen, die dem sich aus der Zusammenlegung ergebenden Knoten zugeordnet ist, die Schlüsselbilder der Klassen von Ebenen der zusammengelegten Knoten umfasst.

2. Verfahren nach Anspruch 1, **dadurch gekennzeichnet, dass** der Wert des Potenzials, das den Kanten und den Knoten zugeordnet ist, durch eine absteigende beziehungsweise aufsteigende Funktion des Zeitabstandes festgelegt wird.

3. Verfahren nach Anspruch 1, **dadurch gekennzeichnet, dass** das Potenzial einer Kante, die zwei Knoten $n_i$ und $n_j$ verbindet, gemäß der folgenden Funktion berechnet wird:

$$V_a(n_i,n_j) = \min_{I_k \in P_i, I_l \in P_j} (w_{att} \cdot F_a(K_{att}, \widetilde{d}_{att}, d_{att}(I_k, I_l)) + w_T \cdot F_a(K_T, \widetilde{d}_T, d_T(I_k, I_l)))$$

und dass das Potenzial eines Knotens, der sich aus der Zusammenlegung zweier Knoten $n_i$ und $n_j$ ergibt, durch die folgende Funktion festgelegt wird:

$$V_n(n_m = n_i \bigcup n_j) = \min_{I_k \in P_i, I_l \in P_j} (w_{att} \cdot F_n(K_{att}, \widetilde{d}_{att}, d_{att}(I_k, I_l)) + w_T \cdot F_n(K_T, \widetilde{d}_T, d_T(I_k, I_l)))$$

wobei

$P_i$ für die Klasse von Ebenen steht, die dem Knoten $n_i$ zugeordnet ist und die Bilder $I_k$ aufweist,
$F_a$ eine absteigende Funktion ist,
$F_n$ eine aufsteigende Funktion ist,
$W_{att}$ und $w_T$ die Gewichte darstellen, die den Attributen und der Zeit zugeordnet sind,
$d_{att}(I_k, I_l$ die Abstandsfunktion ist, die den Attributen zugeordnet ist, die für die zwei Bilder charakteristisch sind,
$\widetilde{d}_{att}$ den Mittelwert der Abstände zwischen Bildern darstellt, die am ursprünglichen Graphen berechnet werden,
$d_T(1_k, 1_l)$ der Zeitabstand zwischen den zwei Bildern ist,
$\widetilde{d}_T$ gleich T ist, das die Zeitschwelle darstellt,
$K_{att}$ und $K_T$ zwei Konstanten sind.

4. Verfahren nach Anspruch 3, **dadurch gekennzeichnet, dass** die absteigende Funktion sich wie folgt darstellt:

$$F_a(K, \widetilde{d}, d) = \frac{1}{1 + e^{\frac{K}{\widetilde{d}}(d - \widetilde{d})}}$$

und die aufsteigende Funktion sich wie folgt darstellt:

$$F_n(K, \widetilde{d}, d) = 1 - \frac{1}{1 + e^{\frac{K}{\widetilde{d}}(d - \widetilde{d})}}$$

5. Verfahren nach Anspruch 1, **dadurch gekennzeichnet, dass** die Iterationen gestoppt werden, sobald die potenzielle Zusammenlegung zweier Knoten (8) zu einer Erhöhung der Energie (9) führt, wobei die Kanten $a_k$ für die Berechnung der Potenziale in der absteigenden Reihenfolge ihres Potenzialwerts ausgewählt werden (7).

**vidéo** → | découpage en plans | **plans** → | extraction d'images-clés | **images-clés** → | extraction d'attributs |

1

**signatures des image-clés**

2

3

| regroupement des images-clés | → | Fabrication du résumé | → **résumé**

4

5

**groupes d'images-clés**

**FIG.1**

① ② ③ ④ ⑤ ⑥

**FIG.2a**

① ⑦ ③ ⑤ ⑥

**FIG.2b**

**FIG.3**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **YEUNG ; YEO.** Segmentation of video by clustering and graph analysis. *Computer Vision and Image Understanding,* 1998, vol. 71 (1), 94-109